(19) **Europäisches Patentamt / European Patent Office / Office européen des brevets**

(11) **EP 4 668 931 A1**

(12) **EUROPEAN PATENT APPLICATION**
published in accordance with Art. 153(4) EPC

(43) Date of publication:
**24.12.2025 Bulletin 2025/52**

(21) Application number: **24734779.2**

(22) Date of filing: **16.02.2024**

(51) International Patent Classification (IPC):
**H04W 72/04** (2023.01)      **H04W 72/232** (2023.01)
**H04L 5/00** (2006.01)

(52) Cooperative Patent Classification (CPC):
**H04L 5/00; H04W 72/04; H04W 72/232**

(86) International application number:
**PCT/KR2024/095336**

(87) International publication number:
**WO 2024/172619 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 US 202363446336 P**

(71) Applicant: **LG Electronics Inc.**
**Yeongdeungpo-gu**
**Seoul 07336 (KR)**

(72) Inventors:
• **AHN, Seungjin**
  **Seoul 06772 (KR)**
• **YANG, Suckchel**
  **Seoul 06772 (KR)**
• **KIM, Seonwook**
  **Seoul 06772 (KR)**
• **CHOI, Seunghwan**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **DEVICE AND METHOD FOR ALLOCATING FREQUENCY RESOURCE FOR MULTI-CARRIER IN WIRELESS COMMUNICATION SYSTEM**

(57)    The present disclosure relates to allocating a frequency resource for a multicarrier in a wireless communication system, and a method performed by a terminal may include, for a plurality of cells being configured, receiving downlink control information (DCI) for scheduling for a multicarrier from a base station and receiving data by using resources indicated by the DCI.

**FIG. 11**

EP 4 668 931 A1

## Description

### Technical Field

The present disclosure relates to a wireless communication system, and more particularly, to an apparatus and a method for allocating a frequency resource for a multicarrier in a wireless communication system.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide an apparatus and a method for allocating a resource more effectively in a wireless communication system.

The present disclosure may provide an apparatus and a method for allocating a frequency resource for a multicarrier in a wireless communication system.

The present disclosure may provide an apparatus and a method for performing multicarrier scheduling in a wireless communication system.

The present disclosure may provide an apparatus and a method for allocating a frequency resource for a plurality of cells by using a physical downlink control channel (PDCCH) of one cell in a wireless communication system supporting carrier aggregation.

The present disclosure may provide an apparatus and a method for performing scheduling for a physical downlink shared channel (PDSCH) or a physical uplink shared channel (PUSCH) of a plurality of cells by using a PDCCH of one cell in a wireless communication system supporting carrier aggregation.

The present disclosure may provide an apparatus and a method for transmitting and receiving downlink control information (DCI) including scheduling information for a plurality of cells through a PDCCH of one cell in a wireless communication system.

The present disclosure may provide an apparatus and a method for configuring a frequency domain resource allocation (FDRA) field including scheduling information for a plurality of cells in a wireless communication system supporting carrier aggregation.

The present disclosure may provide an apparatus and a method capable of optimizing a size of an FDRA field including scheduling information for a plurality of cells for allocating a frequency domain resource for the cells based on a resource block (RB) of a reference cell among the plurality of cells for carrier aggregation in a wireless communication system.

The present disclosure may provide an apparatus and a method capable of optimizing a size of an FDRA field for allocating a frequency domain resource of a plurality of cells based on a size of a resource block group (RBG) in a wireless communication system.

The present disclosure may provide an apparatus and a method capable of optimizing a size of an FDRA field for allocating a frequency domain resource of a plurality of cells based on a bandwidth part (BWP) of the plurality of cells for carrier aggregation in a wireless communication system.

The present disclosure may provide an apparatus and a method capable of optimizing a size of an FDRA field by dividing a plurality of cells for carrier aggregation into a plurality of cell groups and determining the size of the FDRA field according to each cell group in a wireless communication system.

The present disclosure may provide an apparatus and a method for dividing a plurality of cells for carrier aggregation into a plurality of cell groups and indicating a frequency domain resource through a PDCCH of one cell according to each cell group in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

**Technical Solution**

As an example of the present disclosure, a method performed by a terminal in a wireless communication system may include, for a plurality of cells being configured, receiving downlink control information (DCI) for scheduling for a multicarrier from a base station and receiving data by using resources indicated by the DCI. The DCI may include information for allocating a frequency domain resource of scheduled cells among a plurality of cells including a primary cell and at least one secondary cell, the information may include fields for each of the scheduled cells, and a size of the information may be determined based on an active bandwidth part (BWP) of cells belonging to a set maximizing the size of the information among sets of all schedulable cells.

As an example of the present disclosure, a terminal in a wireless communication system may include a transceiver and a processor coupled with the transceiver, the processor may be configured to receive downlink control information (DCI) for scheduling for a multicarrier from a base station and to receive data by using resources indicated by the DCI, for a plurality of cells being configured, the DCI may include information for allocating a frequency domain resource of scheduled cells among a plurality of cells including a primary cell and at least one secondary cell, the information may include fields for each of the scheduled cells, and a size of the information may be determined based on an active bandwidth part (BWP) of cells belonging to a set maximizing the size of the information among sets of all schedulable cells.

As an example of the present disclosure, a communication device may include at least one processor and at least one computer memory coupled with the at least one processor and storing an instruction that instructs operations when executed by the at least one processor, and the operations may include, for a plurality of cells being configured, receiving downlink control information (DCI) for scheduling for a multicarrier from a base station and receiving data by using resources indicated by the DCI. The DCI may include information for allocating a frequency domain resource of scheduled cells among a plurality of cells including a primary cell and at least one secondary cell, the information may include fields for each of the scheduled cells, and a size of the information may be determined based on an active bandwidth part (BWP) of cells belonging to a set maximizing the size of the information among sets of all schedulable cells.

As an example of the present disclosure, a non-transitory computer-readable medium storing at least one instruction includes the at least one instruction that is executable by a processor, the at least one instruction may instruct a device to receive downlink control information (DCI) for scheduling for a multicarrier from a base station and to receive data by using resources indicated by the DCI, for a plurality of cells being configured, the DCI may include information for allocating a frequency domain resource of scheduled cells among a plurality of cells including a primary cell and at least one secondary cell, the information may include fields for each of the scheduled cells, and a size of the information may be determined based on an active bandwidth part (BWP) of cells belonging to a set maximizing the size of the information among sets of all schedulable cells.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, allocation of a frequency resource for a plurality of cells may be efficiently performed.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates an example of a procedure of performing communication based on an adjusted resource block group (RBG) size according to an embodiment of the present disclosure.

FIG. 9 illustrates an example of a procedure of determining a size of a frequency domain resource allocation (FDRA) field and performing communication according to an embodiment of the present disclosure.

FIG. 10 is an example of RBG allocation according to an embodiment of the present disclosure.

FIG. 11 illustrates an example of a procedure of performing communication by using multiple cells according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

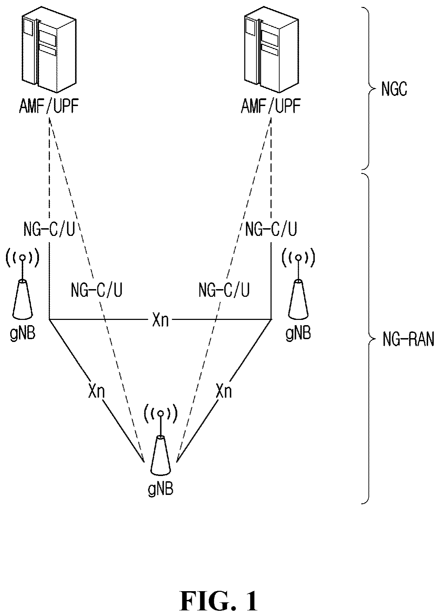

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

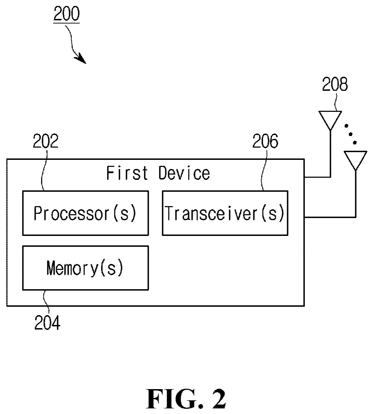

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

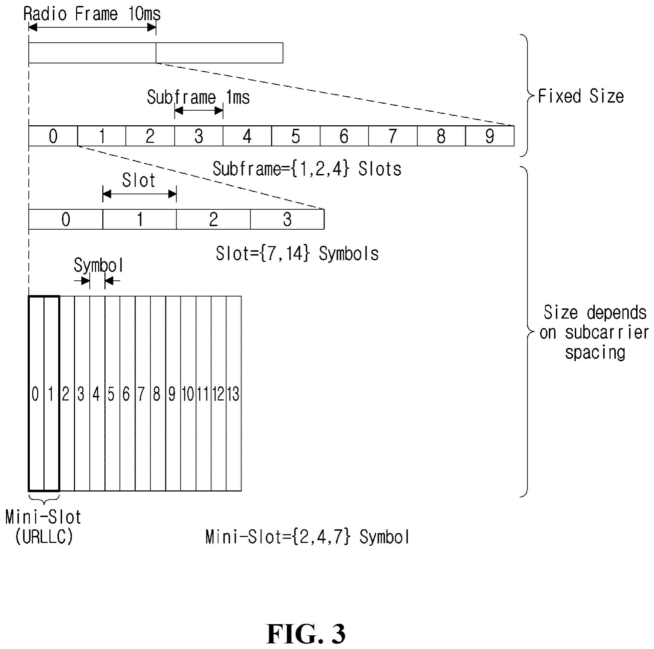

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, \cdots, N_{slot}^{subframe,\mu} - 1\}$ in a subframe and are numbered in an increasing order of $n_{s,f}^\mu \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$

in a subframe is temporally arranged with a start of an OFDM symbol $n_s^{\mu} N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

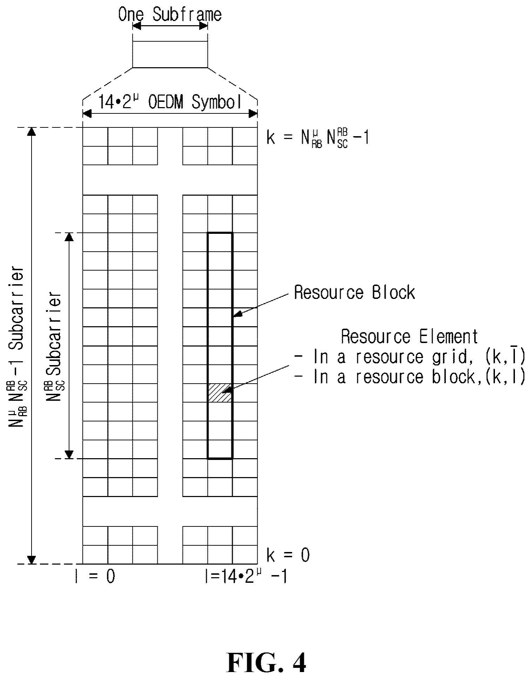

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0, \ldots, N_{RB}^{\mu} N_{SC}^{RB}-1$ is an index in a frequency domain and $l'=0, \ldots, 2^{\mu} N_{symb}^{(\mu)}-1$ refers to a position of a symbol in a subframe. When referring to a resource element in a slot, an index pair (k, l) is used. Here,

$l = 0, \ldots, 2^{\mu} N_{symb}^{(\mu)} - 1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB} = 12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, l) for a subcarrier spacing configuration $\mu$ in a frequency domain is given as in the following Equation 1.

$$[\text{Equation 1}]$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

$$[\text{Equation 2}]$$

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

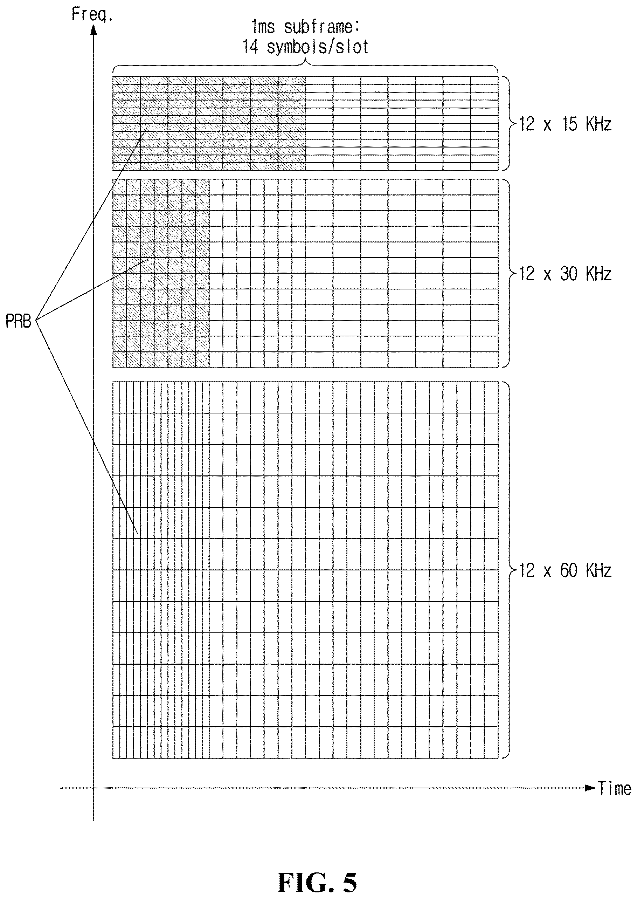

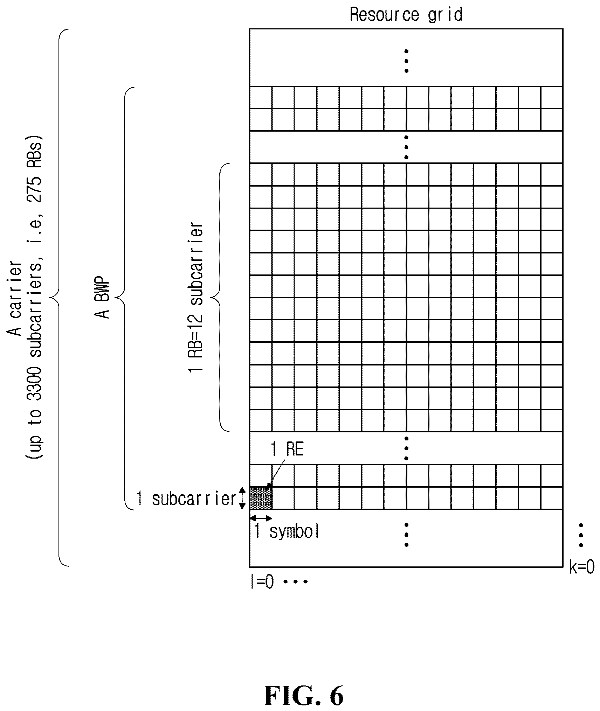

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

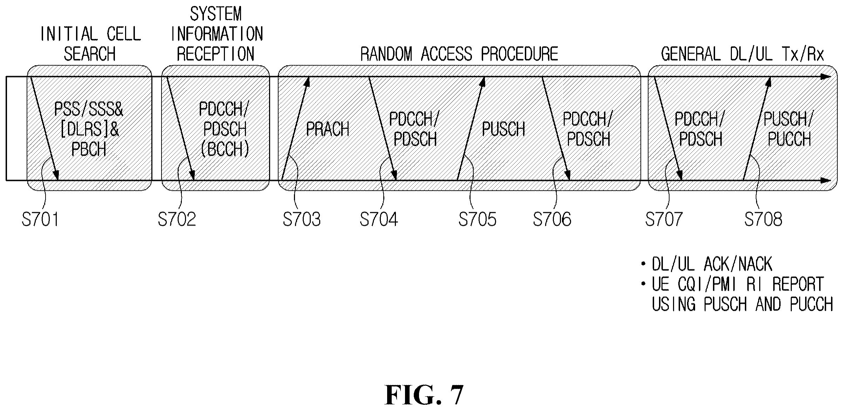

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Concrete Embodiments of the Present Disclosure

Hereinafter, the present disclosure describes a technology for controlling a plurality of cells simultaneously by using one physical downlink control channel (PDCCH) in a base station supporting carrier aggregation (CA). Specifically, the present disclosure describes various embodiments where a base station allocates a frequency resource for physical downlink shared channels (PDSCHs) of a plurality of cells through one PDCCH and signals allocation-related information. The plurality of cells may include at least one of a primary cell (Pcell), a second cell (Scell), a secondary Scell, and a primary Scell (pScell).

5G new radio (NR) is a technology of providing services mostly based on main technologies such as enhanced mobile broadband (eMBB), ultra-reliable low-latency communications (URLLC) and massive IoT (mIoT). eMBB is a technology with main focus on speed enhancement and transmits a lot of information by extending spectrum since the long term evolution (LTE). eMBB is an important frequency aggregation technology that is mostly used in 5G NR.

Currently, 5G NR makes it a rule that a PDCCH of each cell performs scheduling for a PDSCH in charge of data transmission for the cell. That is, in general, a base station should perform scheduling once through a PDCCH to trigger one PDSCH transmission. In addition, in a situation of carrier aggregation, that is, in a situation for enhancing data throughput from the perspective of eMBB by transmitting a PDSCH through a plurality of cells, for simultaneous transmission of the PDSCH through the plurality of cells, the base station should notify scheduling information to a terminal through a PDCCH according to each cell. This is a basic operation that is performed since 4G LTE.

However, as frequency bands supportable in 5G NR increase, the number of cells used for carrier aggregation in 5G NR may be larger than the number of cells used for carrier aggregation in LTE. Accordingly, in case an existing method of performing scheduling through a PDCCH according to each cell is used in 5G NR as it is, a terminal consumes a lot of resources to decode scheduling information.

Hereinafter, accordingly, the present disclosure proposes a method of performing PDSCH scheduling of a plurality of cells by using one PDCCH in one cell. Particularly, the present disclosure proposes a technology of indicating frequency allocation for PDSCHs of a plurality of cells in one piece of PDCCH information for a specific cell in order to transmit PDSCH scheduling information of the plurality of cells to a terminal.

Frequency domain resource allocation (FDRA), which indicates frequency allocation within a PDCCH, is a field using the most bits among various fields in the PDCCH. Accordingly, when frequency allocation for a plurality of cells is indicated, bits as many as a multiple corresponding to the plurality of cells, and thus the amount of information of the PDCCH increases excessively, which is problematic. Currently, a minimum transmission payload of a PDCCH is 140 bits, but in 5G NR, the minimum transmission payload of a PDCCH is equal to or greater than 140 bits, so that FDRA is impossible to operate for a plurality of cells in principle. Accordingly, for a plurality of cells, instead of using as many bits as a multiple corresponding to the plurality of cells within one PDCCH, it is possible to use a media access control (MAC) control element (CE) of L2 with a low limit on a payload size. Alternatively, by sharing common features in an existing layer 1 PDCCH and thus minimizing the increase of bit number in one FDRA, transmission of FDRA information indication for multiple cells becomes possible. Accordingly, it is expected that the problem of performance degradation due to PDCCH decoding of a terminal in eMBB will be solved and usability of a resource element will be improved.

Hereinafter, the present disclosure describes a method of performing simultaneous scheduling for PDSCH transmission of a plurality of cells by using one PDCCH for a specific cell in a carrier aggregation situation. Specifically, as for frequency allocation-related information, that is, FDRA within a PDCCH, the present disclosure will describe a method of expressing FDRA information for a plurality of cells through a small amount of information or a small number of bits by using a commonly shareable feature, not using an amount of information or the number of bits as much as a multiple of cells. In other words, the present disclosure will describe a method of indicating an FDRA field for expressing FDRA information for a plurality of cells in one PDCCH.

Generally, a size of FDRA is about 14 to 18 bits, and the size of FDRA may be different according to a frequency band or bandwidth. In case the size of FDRA is 18 bits, in a carrier aggregation situation, when a frequency is allocated for a plurality of cells by using FDRA in one PDCCH, the number of bits needed corresponds to 18 bits $\times$ the number of scheduling cells (e.g., 4 component carrier (CC)) (e.g., 72 bits). In this case, a situation may occur in which a field of FDRA, which is one of dozens of fields delivered through the PDCCH, occupies about at least 50% of 140 bits that correspond to a total available payload size. Accordingly, it may be impossible to schedule a PDSCH for a plurality of cells in one PDCCH by an existing method of using FDRA. Thus, the present disclosure will propose various techniques capable of PDSCH scheduling for a plurality of cells (e.g., 4 CC) by using a much smaller number of bits than the above-described number of bits. That is, in case a plurality of cells are scheduled by one PDCCH, the present disclosure proposes a technology regarding how to efficiently express a resource allocation result for the plurality of cells without using many bits.

In the present disclosure, in order to reduce DCI overhead required for scheduling of a PDSCH and/or a physical downlink shared channel (PUSCH) in a carrier aggregation situation where a plurality of cells are configured, it is possible to consider a multi-cell scheduling scheme that simultaneously schedules a plurality of serving cells and/or CCs and PDSCH/PUSCH transmission through the cells or CCs by using a single piece of DCI based on justification as shown in Table of Rel-18 below.

[Table 5]

NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FRI bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network.

One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account.

Hereinafter, the present disclosure describes various embodiments about a configuration and interpretation of an FDRA field within DCI for a structural design of the DCI performing the above-described multi-cell scheduling, that is, multi-cell DCI (MC-DCI). A multi-cell scheduling operation for PDSCH transmission or PUSCH transmission described in the present disclosure may be applied to cases of multi-cell scheduling for PUSCH transmission or PDSCH transmission respectively in the same or similar way. In addition, in the present disclosure, a component carrier (CC) may be understood as an active bandwidth part (BWP), cell and the like configured and/or indicated in the CC. Hereinafter, in the present disclosure, a scheduled CC may be referred to as a co-scheduled CC. In addition, in the present disclosure, when cell grouping is performed for a plurality of cells included in scheduled CCs, one pack may be referred to as a cell subgroup. Hereinafter, the present disclosure describes various embodiments that enable PDSCH scheduling for a plurality of CCs by efficiently using a minimum number of bits in an existing DCI field structure of a PDCCH where an FDRA field occupies 13 to 18 bits in each CC, without a DCI field of the PDCCH for multi-carrier scheduling being increased as much as a multiple of CCs.

In the present disclosure, independent FDRA information may be expressed for a plurality of cells, and neither sharing nor association may exist for direct FDRA bits between cells. Herein, when the number of RBGs used in a bitmap-based RA type 1 decreases, the number of used bits of FDRA will decrease. In case one CC is scheduled by DCI, a bit size of FDRA may not be a main issue. However, in case 4 CCs are scheduled by a single pieces of DCI, a bit size aggregating all bits of each FDRA of 4 cells may be significantly large. In the description below, MC-DCI means DCI, which schedules multiples carriers simultaneously, and may be transmitted in one cell. SC-DCI means legacy DCI that schedules an existing one cell.

Embodiment #1: a scheme of indicating a P value, which is a RBG size, or providing scale information for the RBG size according to a BWP

A RBG has a group form that binds (P)RBs in several units, and a RBG size indicates the number of (P)RBs included in a corresponding RBG. This scheme may be generally applied to RA type 0 or RA type 1 of RBG+RIV. Table 6 shows examples of RBG size according to BWP sizes in RA type 0.

[Table 6]

| BWP size | configuration 1 | configuration 1 |
|----------|-----------------|-----------------|
| 1-36 | 2 | 4 |
| 37-72 | 4 | 8 |
| 73-144 | 8 | 16 |
| 145-275 | 16 | 16 |

A RBG is used to indicate a resource according to a bitmap of RA type 0 and a compact scheme of RA type 1. When a RBG size increases, the number of used bits of FDRA may decrease. Referring to Table 6, a RBG size according to a size of BWP is exemplified, and it is seen that the size of a RBG increases when the size of a BWP increases. For example, in Table 6, in the case of a BWP consisting of 96 (P)RBs, if a RBG size is 2, 48 RBGs are defined within the BWP. In this case, a 48-bit bitmap is needed. In case the RBG size is 4, a 12-bit bitmap is needed. A bitmap uses 1 bit per RBG to indicate whether or not it is used by '1' or '0'. In the case of RIV of general RA type 1, granularity is determined in a unit of RB, but RIV of DCI X_2 has granularity in a unit of RBG. Accordingly, originally, RA type 1 needs a smaller number of bits than RA type 0. However, if the granularity of RIV is not one RB but a RBG including a plurality of RBs, a bit size of FDRA may be smaller than RIV of Release-15. Accordingly, in the present disclosure, it is possible to apply a scheme of indicating by a base station a P' size larger than a P value defined in Table 6 as a size of RBG to a terminal or a scheme of indicating K1'/K2' set to a larger size than K1/K2 notifying granularity to RIV. Embodiment #1 is related to a method of indicating a P' value or a K1'/K2' value that is a direct RBG size or providing a scale value to be multiplied by a P or K1/K2 value, irrespective of the number of co-scheduled CCs, when a specific cell is scheduled by MC-DCI. Herein, P' may depend on a BWP ID of the cell.

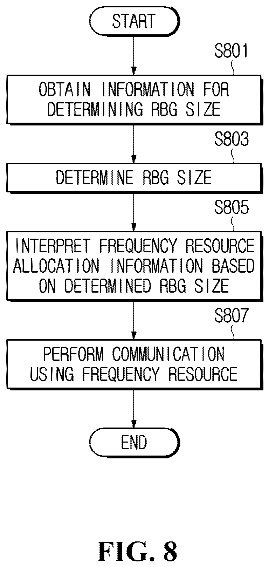

FIG. 8 illustrates an example of a procedure of performing communication based on an adjusted RBG size according to an embodiment of the present disclosure. FIG. 8 exemplifies a method performed by a terminal.

Referring to FIG. 8, at step S801, the terminal obtains information for determining a size of a RBG. The information for determining the size of the RBG includes at least one of a predefined value, a predefined rule, and information indicated by signaling of a high layer. For example, the information for determining the size of the RBG may be a rule indicated by signaling of a high layer. As another example, the information for determining the size of the RBG may be a value indicated by signaling of a high layer.

At step S803, the terminal determines the size of the RBG. The size of the RBG may be a predefined value, be determined by a predefined rule, or be determined by signaling of a high layer. For example, the size of the RBG size may be determined by a rule indicated by signaling of a high layer. As another example, the size of the RBG size may be determined by a value indicated by signaling of a high layer. According to an embodiment of the present disclosure, one terminal may perform communication using at least one or more cells or at least one or more BWPs. Herein, each of the cells may have a RBG with a different size. On the other hand, each of the BPWs may have a RBG with a different size. For example, a different scaling factor may be given to each of BWPs included in one cell.

At step S805, the terminal interprets frequency resource allocation information based on the determined size of the RBG. The frequency resource allocation information is information obtained from a base station and is information that is allocated to the terminal for communication. For example, frequency resource information may be obtained by decoding DCI. The frequency resource allocation information indicates an allocated frequency resource in a unit of RBG.

At step S807, the terminal performs communication using a frequency resource. That is, the terminal may transmit or receive a signal by using a frequency resource that is identified at step S805. Herein, the frequency resource identified at step S805 includes a frequency resource in each of a plurality of cells.

As described with reference to FIG. 8, signaling for an allocated resource may be performed based on an adjusted RBG size. Hereinafter, the present disclosure describes various embodiments of adjusting a size of a RBG.

- Embodiment #1-1: for each BWP of each cell, a P' value is directly known using high layer signaling. Herein, P' is a newly defined PRG size that is different from a predefined RBG size (e.g., a RBG size defined in Table 6). In case the P' value is not present in high layer signaling, a predefined RBG size (e.g., a RBG size defined in Table 6) may be applied.

- Embodiment #1-2: for each BWP of each cell, a scale value (e.g., S value) to be multiplied by a predefined RBG size (e.g., a RBG size defined in Table 6) is known by high layer signaling. For example, the scale value may have a value of 1, 2, 3, 4 and the like. In case the scale value is not present in high layer signaling, the scale value S is deemed to be 1. According to an embodiment, the scale value may be fixed to 2.

In the cases of Embodiment #1-1 and Embodiment #1-2, when the number of co-scheduled CCs becomes different in scheduling, a total bit number of FDRA of MC-DCI may be different. This violates the principle that smooth decoding is possible by fixing a total bit number of MC-DCI. Accordingly, it is desirable that a field size of FDRA is designated as a fixed value before MC-DCI decoding is performed. The relevant description will be presented in Embodiment #5 below.

- Embodiment #1-3: in the case of compact RA type 1, additional values may be added to a range of K1/K2 value constituting a RBG. When an additional value is multiplied by a scale value, a RBG size increases. When a scale value is applied for multiplication, if no scale value is set in a high layer, the scale value is assumed to be 1. For example, the scale value may be 1, 2, 3, 4 and the like. In addition, when an additional value is applied, the additional value may be newly defined as K1'/K2' that is a new parameter of RRC. The new parameter may be set to a first value that has not been present, and a maximum value thereof may be different from an existing list of K1/K2.

- Embodiment #1-4: in case BWP ID is changed, a total bit size of FDRA may also be changed. Herein, if a total bit number of an active BWP ID consisting of a maximum number of co-scheduled CC sets is smaller than a total bit number of a changed BWP ID consisting of the maximum number of co-scheduled CC sets, a total bit size of FDRA may be determined as follows.

Based on a bit number based on an active BWP ID allocated to each cell, a possible RBG may be allocated to each cell. For example, in the case of a cell A: 5 bits and a cell B : 6 bits, and in case the BWP ID is changed, a RBG may be used up to processable bits by using 5 bits for a changed BWP of the cell A and 6 bits for a changed BWP of the cell B, and a remaining bit may be processed as 0.

Based on a total bit number of a corresponding BWP ID combination of FDRA of MC-DCI without distinction of cells, RBGs may be sequentially allocated up to available bits for every cell of CCs sequentially scheduled together. In this case, RBG allocation of a latter cell may be insufficient in a bit of FDRA. In other words, a bit for indicating a RBG of a cell allocated later may be insufficient as compared with the above-described embodiment. For example, in the case of the cell A: 5 bits and the cell B : 6 bits, and in case the BWP ID is changed, based on the 11 bits, a RBG of the cell A may be allocated first, a RBG of the cell B may be processed up to processible bits by using remaining bits, and remaining bits may be processed as 0.

Additionally, for a RBG size in case CCs are scheduled together (e.g., in case only one cell is scheduled by MC-DCI), instead of a P' value or a scale value, a P value or a K1/K2 value may be applied, or another separate P' or K1'/K2' value or scale value may be applied. Whether or not to apply the value may be notified by high layer signaling.

Embodiment #1-5: in case only one CC is scheduled in MC-DCI, an existing P value is applied, and if the number of RBGs or the number of allocated bits of FDRA is insufficient to indicate allocation information, a RBG may be allocated in order of index, and a remaining RBG may be handled as not allocated.

Embodiment #1-6: in case there is a remaining bit in the RBG number or the number of bits allocated to FDRA described in Embodiment #1-5, the remaining bit is filled by 0.

The proposed method may be described in detail as follows.

For each of a plurality of cells that are targets of MC-DCI scheduling, a specific scaling factor S may be set according to each BWP set for the cell. A terminal may operate to apply a Ps value, which is a product of a RBG size P defined in Table 6 (according to each BWP size) and the S value, for a RBG size in a corresponding BWP of a corresponding cell (when scheduled by MC-DCI). Alternatively, for each of a plurality of cells that are targets of MC-DCI scheduling, a RBG size P' in each BWP set for the cell may be set, and a terminal may operate to apply the P' value for a RBG size in a corresponding BWP of a corresponding cell (when scheduled by MC-DCI).

As another method, for each of a plurality of cells that are targets of MC-DCI scheduling, one specific scaling factor S may be commonly set for all BWPs set for the cell, and a terminal may operate to apply a Ps value, which is a product of a RBG size P defined in Table 6 (according to each BWP size) and the S value, for a RBG size for all BWPs of a corresponding cell (when scheduled by MC-DCI). Alternatively, for each of a plurality of cells that are targets of MC-DCI scheduling, one RBG size P' may be commonly set for all BWPs set for the cell, and a terminal may operate to apply the P' value for a RBG size in all BWPs of a corresponding cell (when scheduled by MC-DCI).

As yet another method, one specific scaling factor S may be commonly set for a plurality of cells that are targets of MC-DCI scheduling, and a terminal may operate to apply a Ps value, which is a product of a RBG size P defined in Table 6 (according to each BWP size) and the S value, for a RBG size in all BWPs of all cells (when scheduled by MC-DCI). Alternatively, one RGB size P' may be commonly set for a plurality of cells that are targets of MC-DCI scheduling, and a terminal operate to apply the P' value for a RBG size in all BWPs of all cells (when scheduled by MC-DCI).

Embodiment #2: a scheme of determining a total number of bits or the number of RBGs in FDRA of MC-DCI based on an L value

In Embodiment #1, based on a maximum number of four cells, FDRA is determined by a maximum bit size. In this case, if only one cell or two cells are scheduled by MC-DCI according to a slot, there may be a significant waste of bits. Accordingly, when only one cell is scheduled, a P value defined in Table 6 may be used instead of a P' value of Embodiment #1. That is, a scale value S may be deemed to be 1. A total number of bits may be set beforehand, a specific L value may be set in a high layer, or an L value occupying a largest bit size among bits determined through a BWP ID of each cell among sets of cells, which are scheduled together as presented in Embodiment #1, may be intentionally predefined beforehand, and thus a total number of bits may be determined as shown in Table 7.

[Table 7]

| |
|---|
| Cell A: BWP1 = 10 bits, BWP2 = 4 bits |
| Cell B: BWP1 = 2 bits, BWP2 = 9 bits |
| FDRA size: 13 bits |

Instead of one P' or K1'/K2' value or scale value per BWP ID of Embodiment #1, in a set of candidate CCs that are scheduled together, a P' or K1'/K2' value or a scale may be different according to a BWP ID of each cell. Thus, in comparison with Embodiment #1, an advantage may occur with respect to frequency selectivity. In addition, instead of directly indicating a scale value or a P' or K1'/K2' value, a code point in a unit of 1 to 2 bits may be known through a parameter field for consecutive CC sets that are scheduled together. In addition, in case an L value is directly signaled in a high layer and a specific RBG is indicated due to an insufficient number of bits, the RBG may not be represented in FDRA. Accordingly, there may occur a situation where allocation is not completed in FDRA for a cell, and a cell priority needs to be determined in a bit order of FDRA. For example, a priority order may be defined in descending or ascending order of cell indexes or separately. Herein, as one bit is mapped to each RBG, a bit number may be understood as the number of RBGs. In this embodiment, a field size of overall FDRA may be an L bit set in a high layer or may be predefined.

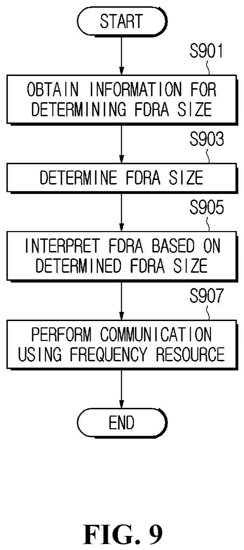

FIG. 9 illustrates an example of a procedure of determining a size of an FDRA field and performing communication according to an embodiment of the present disclosure. FIG. 9 exemplifies a method performed by a terminal.

Referring to FIG. 9, at step S901, the terminal obtains information for determining a size of an FDRA field. For example, information for determining a bit number of FDRA may be signaled from a high layer. Alternatively, the information for determining the bit number of FDRA may include a predefined parameter, a table, and the like.

At step S903, the terminal determines the bit number of FDRA based on the information for determining the bit number of FDRA. For example, the bit number of FDRA may be determined by a rule indicated by high layer signaling. Specifically, the bit number of FDRA may be determined according to the number of cells. On the other hand, the bit number of FDRA may be a specific value. As another example, the bit number of FDRA may be determined as a value equal to or smaller than a specific maximum bit number. According to an embodiment, the bit number of FDRA may be determined according to a method of indicating a scaling factor. The method of indicating the scaling factor may be indicated by high layer signaling. The bit number of FDRA may be determined for each cell. In other words, the bit number of FDRA may be different according to each cell. On the other hand, the bit number of FDRA may be determined for each set of cells.

At step S905, the terminal interprets FDRA based on a determine size of FDRA. For example, each bit of FDRA indicates whether or not a RBG is allocated. Herein, according to the size of FDRA, it may be determined as to which cell each bit of FDRA indicates whether or not a RBG is allocated and which RBG among RBGs of the cell is indicated by each bit of FDRA.

At step S907, the terminal performs communication based on FDRA. That is, the terminal may transmit or receive a signal using an identified frequency resource. Herein, the frequency resource identified at step S905 includes a frequency resource in each of a plurality of cells.

Embodiment #2-1: in case a code point for P' or K1'/K2' or scale is expressed in 1 or 2 bits, in a combination not present in a co-scheduled CC in a corresponding list, there is a code point that expresses P' or K1'/K2' and scale by NULL or 0 in each BWP ID of each cell.

Embodiment #2-2: for a set of co-scheduled CCs, a P' or K1'/K2' value or a scale value may be directly indicated in each BWP ID of each cell, instead of a code point. Each CC set may be indexed and be configured in RRC. Values of each BWP ID of a corresponding cell are indicated according to such an index.

Embodiment #2-3: in order to reduce overhead for Embodiment #2-2, for an index or list for each set and for a code point of 1 to 2 bits, consecutively connected information of P' or K1'/K2' or scale may be indicated as one parameter. For example, in case 4 cells are configured (e.g., Cell#1, Cell#2, Cell#3, and Cell#4), 14 sets of {1}, {2}, {3}, {4}, {1,2}, {2,3}, {3,4}, {1,3}, {1,4}, {2,4}, {1,2,3}, {1,3,4}, {2,3,4} and {1,2,3,4} may be derived as co-scheduled CC sets. Here, if only 8 of the sets are used, indexes are assigned to the 8 sets, and when each of the indexes is mapped to code points of 2-bit {0,1,2,3}, a total of 8 bits or 16 bits may be indicated as one parameter. Furthermore, a scale value may be limited to 2, and thus there is one code point.

Embodiment #3: a scheme of considering the number of bits or the number of RBGs for each cell in FDRA of MC-DCI

This embodiment limits the number of bits in each cell, not a total number of bits of FDRA in a field of MC-DCI as in Embodiment #2. That is, the number of bits used by a corresponding cell is set beforehand. According to Embodiment #1 and Embodiment #2, the number of bits of each cell may be different within FDRA. When a different number of bits are allocated according to importance of each cell, as the number of RBGs becomes different according to BWP ID, some RBGs may not be allocated. Herein, if a large bit size is set, the probability of failing to allocate a RBG may be minimized. In Embodiment #2, there may occur a situation where at least one cell placed in a latter part always fails to indicate allocation of at least one RBG in FDRA bits because of lack of bits. Unlike the above-described embodiments, this embodiment is advantageous in that a cell order needs little care. In this case, a total bit number of FDRA of MC-DCI may be determined as a sum of a maximum number of co-scheduled CCs and the number of bits allocated to each cell, that is, a total number of RBGs.

In case a bit being used is changed due to a change of BWP ID or a change of P' or K1'/K2', RBGs are allocated up to bits allocated per cell. After RBG allocation information is expressed for each cell, a remaining bit is set to 0, and a RBG not expressed is handled as not allocated.

The above embodiment may be described in detail as follows.

For each of a plurality of cells that are targets of MC-DCI scheduling, a maximum number N of RBGs may be set for each BWP set in the cell, and for example, a terminal may operate to apply first or last N RBS indexes among all the RBGs in a corresponding BWP of a corresponding cell, when scheduled by MC-DCI, as FDRA targets. This method may be applied when a RBG size is determined as a Ps value (with S being applied) or a P' value as shown in Embodiment #3-1 proposed above, and for each BWP, the S value and the N value may be set together or the S value and the P' value may be set together.

As another method, for each of a plurality of cells that are targets of MC-DCI scheduling, a maximum number N of RBGs may be commonly set for all BWPs set in the cell, and a terminal may operate to apply first or last N RBS indexes among all the RBGs of all BWPs of a corresponding cell (when scheduled by MC-DCI) as FDRA targets. In this case, if a total number of RBSs in a specific BWP of the cell is K that is smaller than N, the terminal may operate to apply all the K RBGs of the BWP as FDRA targets. This method may be applied when a RBG size is determined as a Ps value (with S being applied) or a P' value as shown in Embodiment #3-1 proposed above, and for each cell, one combination of the S value and the N value may be set or one combination of the S value and the P' value may be set.

As yet another method, a maximum number N of RBGs may be commonly set for each of a plurality of cells that are targets of MC-DCI scheduling, and a terminal may operate to apply first or last N RBS indexes among all the RBGs in all BWPs of all the cells (when scheduled by MC-DCI) as FDRA targets. In this case, if a total number of RBSs in a specific BWP of a specific cell is K that is smaller than N, the terminal may operate to apply all the K RBSs as FDRA targets in the BWP of the cell. This method may be applied when a RBG size is determined as a Ps value (with S being applied) or a P' value as shown in the above-described embodiment, and commonly for a plurality of cells, one combination of the S value and the N value may be set or one combination of the S value and the P' value may be set.

Embodiment #4: a scheme about FDRA bit mapping of RBG index

The present disclosure mainly considers a case where a maximum of 4 cells are scheduled by one piece of MC-DCI. In the case of a bitmap scheme of RA type 0 or a compact RA type 1 scheme, which increases a RBG size to reduce a bit number, a RBG size of a first RBG index and a last RBG index may be smaller than a value multiplied by the above-described P' or K1'/K2' or scale value. This may be referred to as a partial RBG.

[Table 8]

The total number of RBGs within the given part $N_{RBG} = \left\lceil \left( N_{BWP,i}^{size} + \left( N_{BWP,i}^{start} \bmod P \right) \right) / P \right\rceil$ , where

- the size of the first RBG is $RBG_0^{size} = P - N_{BWP,i}^{start} \bmod P$ ,

- the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and $= P$ otherwise,

- the size of all other RBGs is $P$.

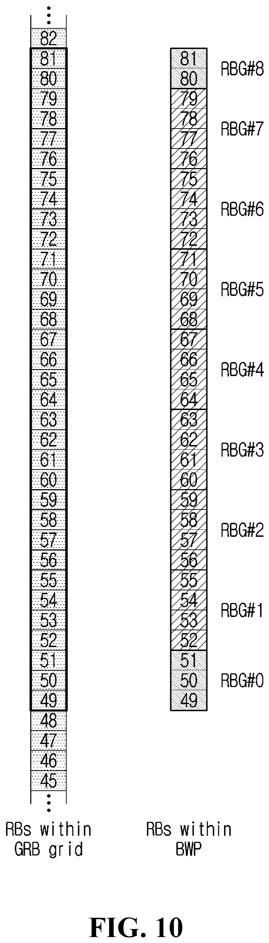

Table 8 is an excerpt from TS 38.214 describing determination of the number of RBGs. Referring to FIG. 10 and Table 8, a RBG size P is 4, but RBG0 includes not 4 PRBs but 3 PRBs. RBG8, which is a last RBG, includes 2 PRBs. FIG. 10 is an example, and if a RBG size increases significantly according to the above-described embodiments, the RBG sizes of a first RBG and a last RBG may be determined within a range from 1 to a value multiplied by a P' or K1'/K2' or scale value. That is, depending on situations, the first RBG and the last RBG may be partial RBGs or full RBGs with a full RBG size. An issue occurs to a situation where there is only one (P)RB in a corresponding RBG index. In this case, 1 bit should be separately allocated because of the one RB. Accordingly, the present disclosure proposes that no separate bit is allocated to a RBG including one PRB. In case a FDRA bit number per cell is 10, if no bit is allocated to a RBG with a small RB number, the bit number may be reduced by a maximum of 2 bits. In case a maximum of 4 CCs are scheduled by MC-DCI, the bit number may be reduced by a maximum of 8 bits. However, in case a RBG size is 16 and the first RBG and the last RBG include 15 or 14 RBs, if no bit is allocated to a corresponding RBG, there may be a limitation on frequency resource utilization. Accordingly, the present disclosure proposes the following embodiments.

- Embodiment #4-1: if an N value is set and a RB number of a RBG is equal to or greater than the N value, a bit is allocated to the RBG. Alternatively, no bit is allocated to a first RBG or a last RBG, or the first RBG or the last RBG is bound with an adjacent full RBG size and 1 bit is allocated thereto. Here, N has a value equal to or greater than 1 and equal to or smaller than the full RBG size. If no bit is allocated, whether or not the first RBG or the last RBG merges with the adjacent RBG may be known through high layer signaling.
- Embodiment #4-2: an N value may be high-layer signaled in RRC. If there is no N value, the N value may be set to a predefined value. N may be determined as 1/2 of an increased RBG size (e.g., P' or K1'/K2') or a RBG size increased through a scale value or may be a RBG size before it is increased.

- Embodiment #4-3: only when the number of co-scheduled CCs is equal to or greater than a specific value, an N value may be applied. That is, if the number of co-scheduled CCs is smaller than the specific value, the N value may be 1. For example, in case the number of co-scheduled CCs is 1, even if a first RBG or a last RBG is a partial RBG, 1 bit may be allocated.

For example, only when 3 or 2 CCs are scheduled simultaneously, the N value may be applied. In this case, a total bit number of FDRA should be determined beforehand irrespective of the number of CCs.

- Embodiment #4-4: in case a first RBG or a last RBG merges with an adjacent RBG, the number of RBs of the first RBG or the last RBG is the number of RBs of a partial RBG plus the number of RBs of a full RBG, and a maximum of 2 RBGs may be subtracted from a total number of RBGs depending on a situation of the merging first RBG or last RBG.
- Embodiment #4-5: in case the number of co-scheduled CCs is 1, a RBG size may return to an existing RBG size before being increased. Herein, in case a first RBG or a last RBG is a partial RBG, even if it has only one RB as before, a bit may be allocated. Unlike in Embodiment #4-5, in case the number of RBs of the first RBG or the last RBG is smaller than the number of RBs of a previous RBG/2, the first RBG or the last RBG may merge with an adjacent RBG or be excluded from bit allocation of RBG.

The above proposed embodiment may be described in detail as follows.

When a specific RBG size of $P_n$ value (e.g., $P_n$ may be determined/set as an existing P value or a $P_s$ value (with S being applied thereto) in the above-proposed Embodiment #4-1 or a P' value) is applied for a specific BWP of a specific cell, a specific RBG in the BWP (e.g., a RBG at a lowest frequency and/or a RBG at a highest frequency) may consist of the number of RBs that is smaller than the $P_n$ value (for convenience, such a RBG is referred to as "partial RBG"). Meanwhile, assignment of RBG indexes up to such a partial RBG and allocation of 1 bit in an FDRA field may excessively increase a DCI payload size in MC-DCI scheduling.

In an embodiment considering this, (in MC-DCI scheduling) no RBG index may be given to a partial RBG as described above (that is, RBG indexing is performed with the exclusion of the partial RBG), and 1 bit may not be allocated. In addition, in the above-proposed Embodiment #4-3, when first or last N RBG indexes among all RBGs in a BWP are determined as FDRA targets according to a setting of a maximum number N of RBGs, the N RBG indexes may be determined with the exclusion of the partial RBG.

In another embodiment, (when MC-DCI scheduling is performed) no RBG index is given to a partial RBG (type 1) consisting of the number of RBs, which is smaller than a specific threshold Th ($< P_n$) (that is, RBG indexing is performed with the exclusion of the partial RBG type 1) and 1 bit is not allocated, a RBG index may be given to a RBG consisting of the number of RBs equal to or greater than the Th value (that is, RBG indexing is performed including the RBG), and 1 bit may be allocated. In addition, in the above-proposed Embodiment #4-3, when N RBG indexes in a BWP are determined as FDRA targets according to a maximum number N of RBGs, N RBG indexes may be determined with the exclusion of such a partial RBG type 1 as described above.

In yet another embodiment, (when MC-DCI scheduling is performed) such a partial RBG and a RBG adjacent thereto in frequency may merge with each other to be reconfigured as a single RBG with a large size, and in this state, RBG indexing may be performed and 1 bit may be allocated for each RBG. In addition, in the above-proposed Embodiment #4-3, when first or last N RBG indexes among all RBGs in a BWP are determined as FDRA targets according to a setting of a maximum number N of RBGs, N RBG indexes may be determined while the above RBG indexing is applied.

In yet another embodiment, when MC-DCI scheduling is applied, as for a partial RBG (type 1) consisting of the number of RBs smaller than a specific threshold Th ($< P_n$), the partial RBG type 1 and a RBG adjacent thereto in frequency may merge with each other to be reconfigured as a single RBG (a RBG consisting of the number of RBs equal to or greater than the Th value is maintained as it is), and in this state, RBG indexing may be performed and 1 bit may be allocated for each RBG. In addition, in the above-proposed Embodiment #4-3, when N RBG indexes in a BWP are determined as FDRA targets according to a maximum number N of RBGs, N RBG indexes may be determined while the above RBG indexing is applied.

Embodiment #5: various other proposals

In the case of FDRA, when a RA type is dynamic, 1 bit may be added to a rear end. A bit thus added indicates different information from bits for frequency allocation and informs which of RA type 1 and RA type 0 is to be used. However, in case MC-DCI schedules up to 4 CCs and each CC follows a dynamic RA type, a maximum of 4 bits may be added. Accordingly, in case a RA type is dynamic, in order to save bits, a common 1 bit may be placed at the end of a bitmap, or a dynamic configuration of RB type may be prohibited for multi-carrier scheduling. In other words, a RA type indication bit may be used to be commonly applicable to CCs, or a dynamic configuration of RA type may not be expected for multi-carrier scheduling.

- Embodiment #5-1: a RA type is dynamically applied, and the RA type is indicated as a common bit value for a plurality of cells in MC-DCI. In other words, a RA type for a plurality of cells is indicated by 1 bit. That is, a RA type is indicated using a 1 bit-size common bit.
- Embodiment #5-2: a RA type is not dynamically configured, and only one of a bitmap and RIV is applied to each cell as a RRC configuration. If a RA type is dynamically configured in RRC, the RA type is treated as configured as type 0. In this case, a RA type indicator, which may be added as a dynamic configuration to an FDRA field, may not be needed.

In addition, when the number of pieces of FDRA field DCI is determined to be used in MC-DCI, the number of bits used in every field should be known beforehand in PDCCH decoding. Accordingly, a field size may be different according to the number of co-scheduled CCs or sets, but in consideration of a worst case, a maximum bit size may be considered as a total bit size of FDRA.

Embodiment #5-3: a total bit size of FDRA according to Embodiment #1 may be determined by a largest value among FDRA bit sizes corresponding to respective co-scheduled CC sets. In other words, a sum M of size values set for cells belonging to each set may be calculated, and a bit size of a maximum value $M_{max}$ among Z M values calculated for Z CC sets respectively may be determined as a total bit size of FDRA.

Alternatively, a total bit size of FDRA may be determined as a largest value between a non-M bit value in a state of not expanding/modifying a RBG size for each active BWP ID of each cell and the above-described $M_{max}$ value. It is because, when only one cell is scheduled by MC-DCI, a case of using granularity in RBG units with its original value before expansion/modification needs to be considered. However, while $M_{max}$ is determined as a total bit size of FDRA, in case only one cell is included in co-scheduled CCs, if the number of bits corresponding to a FDRA size based on an original RBG size is greater than $M_{max}$, allocation may be performed up to a RBG that is capable of allocation with $M_{max}$ bits.

Embodiment #5-4: a total bit size of FDRA according to Embodiment #2 may be L that is known through high layer signaling. Alternatively, while a P' or K1'/K2' or scale value is applied, a total bit size of FDRA may be determined by a sum of bit sizes corresponding to a combination of BWP IDs having a largest number of bits for BWPs of each of cells belonging to a set of co-scheduled CCs.

Embodiment #5-5: according to Embodiment #3, in order to signal a total bit size of FDRA, a bit number for each cell is indicated by high layer signaling. Accordingly, a total sum of bit numbers per cell corresponding to a set including the largest number of cells among co-scheduled CC sets may be determined as a total bit size of FDRA.

Additionally, for an FDRA field, in case a separate field is configured according to each cell in multi-cell scheduling DCI (e.g., MC-DCI), a scheme of determining an FDRA field size in the multi-cell scheduling DCI may have detailed embodiments as follows.

In single-cell scheduling DCI (e.g., SC-DCI), according to a BWP size and/or a RBG size/the number of RBGs, a size of an FDRA field may be set to an L bit. Here, L may be set identically or differently according to each cell.

Meanwhile, in multi-cell scheduling DCI, in case an FDRA field is configured in a separate field form according to each cell, for each of a plurality of (e.g., $N_{co}$) co-scheduled cell sets (e.g., cell sets that are simultaneously scheduled through the same multi-cell DCI) included in an entire scheduled cell set (e.g., all cell sets that are capable of scheduling through multi-cell DCI), a sum $L_{sum}$ of L values set for each of cells belonging to the co-scheduled cell sets is calculated, and among $N_{co}$ $L_{sum}$ values calculated for each of $N_{co}$ co-scheduled CC sets, a maximum value may be determined as a size of an FDRA field included in multi-cell scheduling DCI.

For example, for an entire scheduled cell set {Cell#1, Cell#2, Cell#3}, in case Cell Set#1 and Cell Set#2, which are two co-scheduled cell sets, are configured as {Cell#1, Cell#2} and {Cell#2, Cell#3} and Ls set for Cell#1, Cell#2 and Cell#3 are 10 bits, 12 bits and 15 bits respectively, $L_{sum}$ of Cell Set#1 scheduled together is 22 bits, and $L_{sum}$ of Cell Set#2 scheduled together is 27 bits. In this case, a size of an MCS field configured within multi-cell DCI may be determined by 27 bits that is a larger value of the two $L_{sum}$ values.

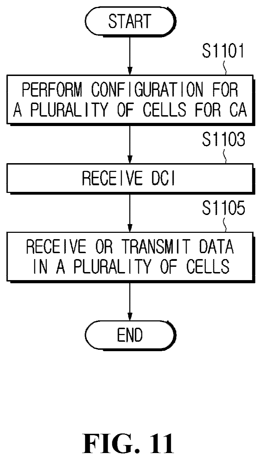

FIG. 11 illustrates an example of a procedure of performing communication by using multiple cells according to an embodiment of the present disclosure. FIG. 11 exemplifies a method performed by a terminal.

Referring to FIG. 11, at step S1101, the terminal performs configuration for a plurality of cells for CA. Specifically, after performing a connection establishment procedure for a primary cell, the terminal may perform a connection establishment procedure for at least one secondary cell. The terminal may access a base station through a random access procedure and then perform a connection establishment procedure with the base station. Furthermore, the terminal may receive an MAC CE for activating at least one secondary cell.

At step S1103, the terminal receives DCI. Herein, the DCI may include information for multi-carrier scheduling. That is, the terminal may identify a result of the multi-carrier scheduling through the DCI. For example, the DCI may include information indicating resources allocated in a plurality of cells including one primary cell and at least one secondary cell. Herein, a frequency resource per cell may be indicated according to the above-described various embodiments. For example, the information indicating the allocated resources may include FDRA for allocating a frequency resource. According to an embodiment, the FDRA includes separate fields per cell, that is, sub-fields or blocks. Herein, the sub-fields correspond to at least one of cells indicated by a list (e.g., scheduledCellComboList, scheduledCellList) included in configuration information for configuring MC-DCI. A length of the FDRA may be determined according to the above-described various embodiments. For example, the length of the FDRA may be determined based on an active BWP of cells belonging to a set maximizing a size of the FDRA among sets of all schedulable cells. Herein, if each sub-field includes a larger number of bits than the number of unit resources (e.g., RBGs) to be indicated in a corresponding cell, at least one bit not corresponding to the unit resources is set to 0.

At step S1105, the terminal receives or transmits data in a plurality of cells. The terminal may receive or transmit data through resources of the plurality of cells indicated by the DCI. In case a downlink resource is allocated by the DCI, the terminal receives data. To this end, the terminal may perform waveform demodulation, constellation demapping, channel decoding, and the like. In case an uplink resource is allocated by the DCI, the terminal transmits data. To this end, the terminal may perform channel encoding, scrambling, rate matching, constellation mapping, resource mapping, layer mapping, waveform modulation, and the like.

With the evolution and development into 5G NR, frequency bands capable of simultaneous transmission using CA have increased to 6 GHz and more or mmWave 20 GHz, 30 GHz, 60 GHz, and 100 GHz in various ways, and the number of cells operating simultaneously has significantly increased. Since the previous 4G system, following whichever of self-scheduling scheme and cross-carrier scheduling scheme, it is a general principle that one PDCCH is transmitted, that is, DCI is transmitted at least once for at least one PDSCH transmission in one cell. If a small number of PDSCHs are transmitted simultaneously, there may not be a great burden of decoding PDCCH multiple times. However, in case a certain large number of PDCCHs should be decoded, it may not only affect the performance of a terminal but also consume a lot of frequency and time resources. Accordingly, a resource for traffic transmission may be reduced.

Thus, it is desirable that PDSCHs of a plurality of cells are scheduled by using one PDCCH. However, due to a limit on a maximum amount of available information in the 5G NR system (e.g., a maximum of 140 bits that is a payload size of polar codes), it is difficult to transmit FDRA requiring a large number of bits as many times as the number of co-scheduled CCs. Accordingly, the present disclosure proposes a control scheme capable of scheduling for many cells without using an increasing number of bits in a PDDCH, that is, in DCI in proportion to the number of co-scheduled CCs for FDRA. According to the above-described various embodiments, simultaneous scheduling for multiple carriers using a single PDCCH may be possible, and it may be selectively applied in terms of operation by controlling and managing a suitable FDRA bit size according to the number of CCs.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method performed by a terminal in a wireless communication system, the method comprising:

   for a plurality of cells being configured, receiving downlink control information (DCI) for scheduling for a multicarrier from a base station; and
receiving data by using resources indicated by the DCI,
wherein the DCI includes information for allocating a frequency domain resource of scheduled cells among a plurality of cells including a primary cell and at least one secondary cell,
wherein the information includes fields for each of the scheduled cells, and
wherein a size of the information is determined based on an active bandwidth part (BWP) of cells belonging to a set maximizing the size of the information among sets of all schedulable cells.

2. The method of claim 1, wherein at least one field of the fields includes more bits than the number of unit resources that are to be indicated in a corresponding cell, and
wherein among the bits included in the at least one field at least one bit not corresponding to the unit resources is set to 0.

3. The method of claim 1 further comprising receiving setting information associated with a bit number of each of the fields.

4. The method of claim 1, wherein each of the fields includes information associated with the frequency domain resource that is generated according to resource allocation (RA) type 0 or type 1.

5. The method of claim 4, wherein the information includes information associated with a RA type that is commonly applied to the fields.

6. The method of claim 1, wherein each of the fields includes a bitmap including bits including information regarding whether or not each of resource block groups (RBGs) of a corresponding cell is allocated.

7. The method of claim 6, wherein a size of the RBG is determined by multiplying a RBG size included in a RBR-sized table corresponding to a predefined BWP by a scale value.

8. The method of claim 7, wherein the scale value is differently set according to each cell.

9. The method of claim 6, wherein a first bit of the bitmap includes information regarding whether or not a first RBG and a second RBG are allocated, based on the first RBG of RBGs of the corresponding cell including only one resource block (RB).

10. A terminal in a wireless communication system, the terminal comprising:

a transceiver; and
a processor coupled with the transceiver,
wherein the processor is configured to:

for a plurality of cells being configured, receive downlink control information (DCI) for scheduling for a multicarrier from a base station, and
receive data by using resources indicated by the DCI,
wherein the DCI includes information for allocating a frequency domain resource of scheduled cells among a plurality of cells including a primary cell and at least one secondary cell,
wherein the information includes fields for each of the scheduled cells, and
wherein a size of the information is determined based on an active bandwidth part (BWP) of cells belonging to a set maximizing the size of the information among sets of all schedulable cells.

11. A communication device comprising:

at least one processor; and
at least one computer memory coupled with the at least one processor and storing an instruction that instructs operations when executed by the at least one processor,
wherein the operations comprises:

for a plurality of cells being configured, receiving downlink control information (DCI) for scheduling for a multicarrier from a base station; and

receiving data by using resources indicated by the DCI,
where the DCI includes information for allocating a frequency domain resource of scheduled cells among a plurality of cells including a primary cell and at least one secondary cell,
where the information includes fields for each of the scheduled cells, and
wherein a size of the information is determined based on an active bandwidth part (BWP) of cells belonging to a set maximizing the size of the information among sets of all schedulable cells.

12. A non-transitory computer-readable medium storing at least one instruction, the non-transitory computer-readable medium comprising the at least one instruction that is executable by a processor,
wherein the at least one instruction instructs a device to:

for a plurality of cells being configured, receive downlink control information (DCI) for scheduling for a multicarrier from a base station, and
receive data by using resources indicated by the DCI,
wherein the DCI includes information for allocating a frequency domain resource of scheduled cells among a plurality of cells including a primary cell and at least one secondary cell,
wherein the information includes fields for each of the scheduled cells, and
wherein a size of the information is determined based on an active bandwidth part (BWP) of cells belonging to a set maximizing the size of the information among sets of all schedulable cells.

**FIG. 1**

<u>200</u>

208

202    206

First Device

Processor(s)    Transceiver(s)

Memory(s)

204

# FIG. 2

Radio Frame 10ms

Subframe 1ms

Fixed Size

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbol

**FIG. 3**

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$          $l = 14 \cdot 2^{\mu} - 1$

**FIG. 4**

**FIG. 5**

Resource grid

A carrier
(up to 3300 subcarriers, i.e, 275 RBs)

A BWP

1 RB=12 subcarrier

1 RE

1 subcarrier

1 symbol

l=0 ・・・

k=0

FIG. 6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701

S702

S703

S704

S705

S706

S707

S708

• DL/UL ACK/NACK
• UE CQI/PMI RI REPORT
  USING PUSCH AND PUCCH

**FIG. 7**

START

OBTAIN INFORMATION FOR
DETERMINING RBG SIZE
S801

DETERMINE RBG SIZE
S803

INTERPRET FREQUENCY RESOURCE
ALLOCATION INFORMATION BASED
ON DETERMINED RBG SIZE
S805

PERFORM COMMUNICATION
USING FREQUENCY RESOURCE
S807

END

**FIG. 8**

START

OBTAIN INFORMATION FOR
DETERMINING FDRA SIZE
S901

DETERMINE FDRA SIZE
S903

INTERPRET FDRA BASED ON
DETERMINED FDRA SIZE
S905

PERFORM COMMUNICATION
USING FREQUENCY RESOURCE
S907

END

**FIG. 9**

RBs within
GRB grid

RBs within
BWP

RBG#8
RBG#7
RBG#6
RBG#5
RBG#4
RBG#3
RBG#2
RBG#1
RBG#0

**FIG. 10**

START

S1101

PERFORM CONFIGURATION FOR A PLURALITY OF CELLS FOR CA

S1103

RECEIVE DCI

S1105

RECEIVE OR TRANSMIT DATA IN A PLURALITY OF CELLS

END

# FIG. 11

## INTERNATIONAL SEARCH REPORT

| International application No. |
| --- |
| **PCT/KR2024/095336** |

### A. CLASSIFICATION OF SUBJECT MATTER

**H04W 72/04**(2009.01)i; **H04W 72/232**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CA(carrier aggregation), frequency resource, allocation, multi-cell, DCI, active, BWP, CC(component carrier), FDRA(frequency domain resource allocation), field

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | OPPO. Discussion on multi-cell PUSCH/PDSCH scheduling with a single DCI. R1-2211488, 3GPP TSG RAN WG1 #111. Toulouse, France. 07 November 2022.<br>See sections 2.1 and 2.2.2. | 1,3-5,10-12<br>6<br>2,7-9 |
| Y | CMCC. Discussion on multi-cell PUSCH/PDSCH scheduling with a single DCI. R1-2211695, 3GPP TSG RAN WG1 #111. Toulouse, France. 07 November 2022.<br>See section 2.3. | 6 |
| A | LENOVO. On multi-cell scheduling via a single DCI. R1-2211585, 3GPP TSG RAN WG1 #111. Toulouse, France. 07 November 2022.<br>See section 2. | 1-12 |
| A | LG ELECTRONICS. Discussion on Multi-cell PUSCH/PDSCH scheduling with a single DCI. R1-2212303, 3GPP TSG RAN WG1 #111. Toulouse, France. 07 November 2022.<br>See sections 2-5. | 1-12 |

☑ Further documents are listed in the continuation of Box C. ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 May 2024** | **28 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/095336**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2020-0099581 A (WILUS INSTITUTE OF STANDARDS AND TECHNOLOGY INC.) 24 August 2020 (2020-08-24)<br>See paragraphs [0261]-[0309]; and figures 16-20. | 1-12 |

Form PCT/ISA/210 (second sheet) (July 2022)

**INTERNATIONAL SEARCH REPORT**
Information on patent family members

International application No.

**PCT/KR2024/095336**

| Patent document cited in search report | | | Publication date (day/month/year) | Patent family member(s) | | | Publication date (day/month/year) |
|---|---|---|---|---|---|---|---|
| KR | 10-2020-0099581 | A | 24 August 2020 | CN | 111567117 | A | 21 August 2020 |
| | | | | CN | 116489793 | A | 25 July 2023 |
| | | | | CN | 116489794 | A | 25 July 2023 |
| | | | | CN | 116489795 | A | 25 July 2023 |
| | | | | EP | 3740002 | A1 | 18 November 2020 |
| | | | | EP | 3740002 | A4 | 10 November 2021 |
| | | | | EP | 3740002 | B1 | 14 June 2023 |
| | | | | EP | 4050954 | A1 | 31 August 2022 |
| | | | | EP | 4050955 | A1 | 31 August 2022 |
| | | | | EP | 4280779 | A1 | 22 November 2023 |
| | | | | JP | 2021-510487 | A | 22 April 2021 |
| | | | | JP | 2023-051905 | A | 11 April 2023 |
| | | | | JP | 2023-051906 | A | 11 April 2023 |
| | | | | JP | 2023-130334 | A | 20 September 2023 |
| | | | | JP | 7235340 | B2 | 08 March 2023 |
| | | | | JP | 7427279 | B2 | 05 February 2024 |
| | | | | JP | 7446641 | B2 | 11 March 2024 |
| | | | | KR | 10-2022-0088954 | A | 28 June 2022 |
| | | | | KR | 10-2022-0089716 | A | 28 June 2022 |
| | | | | KR | 10-2023-0048563 | A | 11 April 2023 |
| | | | | KR | 10-2411788 | B1 | 23 June 2022 |
| | | | | US | 11497033 | B2 | 08 November 2022 |
| | | | | US | 11632768 | B2 | 18 April 2023 |
| | | | | US | 11737078 | B2 | 22 August 2023 |
| | | | | US | 2021-0058940 | A1 | 25 February 2021 |
| | | | | US | 2022-0248413 | A1 | 04 August 2022 |
| | | | | US | 2022-0287046 | A1 | 08 September 2022 |
| | | | | US | 2023-0354294 | A1 | 02 November 2023 |
| | | | | WO | 2019-139444 | A1 | 18 July 2019 |

Form PCT/ISA/210 (patent family annex) (July 2022)